# FASCICULE DE BREVET EUROPEEN

(11) **EP 1 968 912 B1**
(45) Date de publication et mention de la délivrance du brevet: **07.10.2009**
(21) Numéro de dépôt: 06842174.2
(22) Date de dépôt: 15.12.2006
(51) Int. Cl.: C04B 35/66

(54) **MELANGE REFRACTAIRE AUTOCOULABLE**
SELBSTFLIESSENDE FEUERFESTE MISCHUNG
SELF-FLOW REFRACTORY MIXTURE

(30) Priorité: 21.12.2005 FR 0513031
(43) Date de publication de la demande: 17.09.2008
(73) Titulaire: Saint-Gobain Centre de Recherches et d'Etudes Européen, 92400 Courbevoie (FR)
(72) Inventeur: CHAMPION, Thibault, F-84460 Cheval Blanc (FR); HIS, Christian Claude, F-84300 Cavaillon (FR); VILLERMAUX, Franceline Marguerite Louise, F-84000 Avignon (FR)
(74) Mandataire: Sartorius, Jérome
(86) Numéro de dépôt international: PCT/FR2006/051364
(87) Numéro de publication internationale: WO 2007/074275

(56) Documents cités:
- EP-A- 0 609 868

## Description

L'invention se rapporte à un mortier réfractaire autocoulable, en particulier pour réaliser des ciments ou des bétons réfractaires frittés, ainsi que l'utilisation de ce mortier pour remplir par autocoulage un orifice de moins de 25 mm de large.

Les mortiers réfractaires autocoulables, dits « self-flow » en anglais selon la terminologie définie par la norme ASTM C71 « Standard terminology relating to refractories », sont des mélanges humides qui peuvent être mis en oeuvre sans vibration ni apport d'énergie extérieur, sans provoquer de ségrégation.

Ces mortiers sont ainsi particulièrement utiles dans des applications où une vibration ou une pression est difficile, voire impossible, par exemple pour combler les petits espaces confinés ou les anfractuosités d'une largeur inférieure à 25mm de largeur, plus typiquement inférieure à 10mm. En effet, les outils vibrants ou damants ne peuvent accéder à de tels espaces. Pour pouvoir remplir sensiblement complètement de tels interstices, les mortiers réfractaires autocoulables, qualifiés de « mortiers de remplissage », présentent typiquement une valeur de coulabilité supérieure à 280, de préférence à 300.

Les mortiers réfractaires autocoulables sont particulièrement utiles dans le domaine des revêtements d'incinérateurs ou de réacteurs de la pétrochimie, par exemple pour boucher les interstices entre les tuiles réfractaires et l'enveloppe métallique d'un réacteur. Dans ces applications, le mortier réfractaire assure notamment une protection ultime de l'enveloppe métallique du réacteur en cas de dégradation accidentelle du revêtement réfractaire, par exemple en cas de chute de tuiles réfractaires de couverture. Il préserve ainsi l'enveloppe métallique du réacteur jusqu'à réparation du revêtement réfractaire.

Pour rendre autocoulable un mortier réfractaire, il est connu d'y ajouter de la silice sous forme de fumée de silice ou à l'état colloïdal. Les particules de silice sont alors classiquement sensiblement sphériques, d'un diamètre compris entre 0,3 et 0,5 µm. Elles agissent sur la coulabilité du mélange réfractaire du fait non seulement de leur petite taille, mais aussi de leur aptitude à se lier chimiquement, par des liaisons de type Van der Waals, avec les molécules d'eau. Elles forment alors un gel constitué de liaisons Si-O-H qui procure un effet stéréochimique. L'ajout d'eau dans le mélange conduit ainsi à le fluidifier efficacement.

Par exemple, EP 0 609 868 décrit des mélanges comportant au moins 4,95% de silice, 2 à 30 % de particules sphériques, de diamètre médian allant jusqu'à 30 µm. La coulabilité de ces mélanges, mesurée selon le test ASTM C1446-99, est supérieure à 180 mm si les mélanges comportent au moins 6 % d'eau, en pourcentage en masse sur la base de la matière sèche.

La présence de silice dans un mortier réfractaire, que ce soit sous forme de fumée de silice, à l'état colloïdal, ou incorporée dans des constituants du mortier, par exemple sous la forme d'argiles réfractaires, dégrade cependant certaines propriétés du produit obtenu par frittage du mortier réfractaire autocoulable. En particulier, il est connu que la présence de silice nuit à la résistance au fluage à des températures supérieures ou égales à 1500°C. Dans certaines conditions de service, la présence de silice contribue également à accélérer la corrosion et l'usure, par exemple du fait d'une évaporation notamment sous forme SiO, dans un environnement réducteur chimiquement voire comportant de l'hydrogène gazeux.

A la place de la silice, il est également connu d'ajouter des dispersants et une grande quantité d'eau, typiquement supérieure ou égale à 20%, en masse par rapport à la masse des matières sèches. Le mélange réfractaire autocoulable doit alors être séché très lentement afin d'éviter l'apparition de fissures dans le produit fritté. Une fissuration du produit fritté nuit en effet à sa résistance mécanique et permet en outre des infiltrations de gaz ou de liquides. La mise en oeuvre de ces mortiers autocoulables induit donc des coûts élevés.

Une autre technique pour améliorer la coulabilité de mélanges secs est connue dans le domaine des céramiques à grains fins, c'est-à-dire de tailles inférieures à 200 µm. Selon cette technique, les grains sont agglomérés sous forme de granulats sensiblement sphériques, par granulation classique ou par atomisation notamment. Un ajout d'eau dans un mélange de grains granulés dégrade cependant considérablement la coulabilité. En outre, l'ajout d'eau ne conduit pas à une prise en masse, mais à une désagrégation des agglomérats. Ces mélanges granulés ne peuvent donc servir à fabriquer des mortiers autocoulables.

On connaît aussi de JP 11092241 des mortiers réfractaires présentant une capacité améliorée à la compaction lors d'un coulage ou d'une mise sous pression. Ces mélanges comportent de 10 à 35 % de poudres sphériques de 0,1 à 2 mm de diamètre et au moins 9,8% d'eau, en pourcentages en masse sur la base de la matière réfractaire de base comportant des particules sphériques et des poudres d'oxydes réfractaires. De tels ajouts d'eau sont inacceptables pour des mortiers autocoulables car ils conduisent à des fissurations lors de la montée en température du réacteur. Ces fissurations résultent du confinement du mortier de remplissage, la surface libre pour l'évaporation de l'eau étant faible par rapport à la masse installée. Elles rendent le produit particulièrement sensible à la corrosion par les gaz ou les liquides et annulent la fonction protectrice du mortier. Un mortier réfractaire de remplissage autocoulable doit ainsi présenter un rapport de la valeur de coulabilité sur le pourcentage massique d'eau ajoutée par rapport à la masse de la matière réfractaire de base d'au moins 35. Les mélanges présentés dans JP 11092241 ne présentent qu'un ratio de l'ordre de 14 à 19.

JP 11092241 indique en outre qu'un ajout de poudres sphériques inférieur à 10 % conduit à une dégradation conséquente de la coulabilité et que les particules de diamètre inférieur à 0,1 mm conduisent à des phénomènes de ségrégation préjudiciables.

On connaît aussi de JP3-115176 des mélanges réfractaires comportant de 1 à 50 % de poudres sphériques de 0,001 à 0,1mm de diamètre, en pourcentages en masse sur la base de la matière réfractaire de base. Ces mélanges sont destinés à être injectés, le but de JP3-115176 étant de fournir des mélanges présentant une faible résistance à l'injection. Les mélanges injectables, prévus pour être projetés dans une installation de gunitage, ou « mélanges projetables », se distinguent des mortiers autocoulables par plusieurs caractéristiques.

En premier lieu, leur fonction n'est pas de combler des interstices, mais de couvrir des surfaces libres. Les mélanges projetables doivent présenter une résistance mécanique élevée, ce qui explique les teneurs élevées en résine phénolique ou en ciment à base d'aluminate de chaux (10 à 15% ajoutés, en masse par rapport à la masse minérale des particules sphériques et des autres particules d'oxydes (ou « agrégat »)) Ces mélanges présentent par conséquent des ajouts d'eau relativement élevés compris entre 9,5 et 13% d'eau ajoutée en masse par rapport à la masse des particules sphériques et des autres particules d'oxydes. Les ratios valeur de coulabilité / pourcentage d'eau ajoutée sont donc de l'ordre de 20 à 32 ce qui est insuffisant pour que ces mélanges puissent servir de mortiers de remplissage. Les inventeurs ont pu vérifier que de tels ajouts d'eau conduisent en effet à des fissurations lorsque le mortier est inséré dans un interstice présentant une faible surface libre.

De plus, les mélanges injectés présentent classiquement une teneur en aluminate de CaO de 15% dans la composition minérale du produit. Une telle teneur est particulièrement défavorable à la résistance à la corrosion.

Par ailleurs, les particules sphéroïdisées, telles que celles présentées dans JP3-115176 ou JP11-092241, présentent des distributions de taille d'une largeur généralement supérieure à 100%, ce qui en restreint, comme cela est précisé dans ces demandes, l'utilisation et conduit à des ajouts d'eau élevés.

Il existe donc un besoin pour un mortier réfractaire de remplissage autocoulable, c'est-à-dire présentant notamment une valeur de coulabilité d'au moins 280 et un rapport de la valeur de coulabilité sur le pourcentage massique d'eau ajoutée par rapport à la masse de la matière réfractaire de base d'au moins 35, permettant de fabriquer des produits frittés présentant une résistance à la corrosion meilleure que celle obtenue à partir des mortiers autocoulables connus contenant de la silice.

Selon l'invention, on atteint ce but au moyen d'un mortier réfractaire de remplissage autocoulable comportant,
➢ en pourcentages en masse sur la base de la matière réfractaire de base :
   - au moins 1 %, de préférence au moins 5 %, de préférence encore au moins 7 %, et au plus 10 % de particules sphériques non granulées de taille médiane supérieure ou égale à 0,1 µm et inférieure ou égale à 2 mm, de préférence inférieure ou égale à 1 mm, de préférence encore inférieure ou égale à 100 µm, de préférence toujours inférieure ou égale à 1 µm, et
➢ en pourcentages en masse par rapport à la masse totale de matière sèche du mortier (qui inclut la matière réfractaire de base et les liants secs)
   - moins de 4,5% de silice (SiO₂), de préférence moins de 2 %, de préférence encore moins de 1 %, de préférence toujours pas de silice, et
   - entre 1% et 8 % d'eau, de préférence moins de 5%, de préférence encore moins de 4%,
   l'écart-type relatif des tailles des particules sphériques non granulées, mesuré par le rapport entre l'écart-type et la moyenne de cette distribution, étant inférieur à 100%, de préférence inférieur à 60%, de préférence encore inférieur à 10%.

De manière surprenante, les inventeurs ont découvert que le mortier de remplissage autocoulable selon l'invention présente une coulabilité satisfaisante sans comporter de silice, comme on le verra plus en détail dans la suite de la description.

La limitation de la teneur en silice permet avantageusement de conférer une résistance satisfaisante à la corrosion. Cette limitation permet également d'améliorer la résistance au fluage et à la fissuration. Selon les applications, cette limitation peut encore améliorer d'autres caractéristiques du produit obtenu.

De préférence, le mortier selon l'invention comporte encore une ou plusieurs des caractéristiques optionnelles suivantes :
- Les particules sphériques présentent une sphéricité supérieure ou égale à 0,8, de préférence supérieure ou égale à 0,9.
- La teneur en alumine est supérieure à 95 % en pourcentage en masse sur la base des matières sèches, et, de préférence également sur la base de la matière réfractaire de base. Avantageusement, les produits frittés obtenus à partir d'un tel mortier présentent une bonne résistance au fluage, c'est-à-dire une faible variation dimensionnelle à chaud sous contrainte de pression et à température fixée.

L'invention concerne également l'utilisation d'un mortier selon l'invention pour remplir par autocoulage un orifice de moins de 25 mm de large, de préférence un orifice de moins de 10 mm et d'une profondeur d'au moins 50 mm.

On appelle couramment « agrégats » les particules réfractaires, à l'exclusion des additifs ajoutés pour exercer une fonction de liant avant séchage du mortier, qui ne sont pas des particules sphériques non granulées, c'est-à-dire en particulier les particules non sphériques.

Une particule est dite « non granulée » lorsqu'elle n'est pas formée par une agglomération de grains, par granulation classique ou par atomisation notamment.

Par « matière réfractaire de base » ou « masse réfractaire de base », on entend l'ensemble des constituants réfractaires non oxydes, comme le carbure de silicium ou le nitrure de silicium Si₃N₄, ou/et des oxydes réfractaires, en particulier à base d'Al₂O₃, de ZrO₂, à l'exclusion des additifs ajoutés pour exercer une fonction de liant avant séchage du mortier, comme par exemple des liants temporaires ou des liants hydrauliques comme ceux à base d'aluminate de chaux. La matière réfractaire de base représente les constituants majeurs, qui confèrent les propriétés du ciment obtenu par frittage du mortier. Cette définition exclut également l'eau, qui n'est pas une matière réfractaire. La matière réfractaire de base est donc constituée par les agrégats et les particules sphériques non granulées.

On appelle « largeur » d'une distribution ou « écart-type relatif », le rapport entre l'écart-type et la moyenne. Ce rapport est exprimé en pourcentage. Ainsi une largeur de 100% correspond à un écart-type égal à la moyenne.

On appelle « taille » d'une particule sa plus grande dimension mesurée sur une image de cette particule. La mesure de la taille des particules d'une poudre s'effectue à partir d'une image de cette poudre versée sur un feutre autocollant.

On considère qu'une particule est « sphérique » dès lors qu'elle présente une sphéricité, c'est-à-dire un rapport entre son plus petit et son plus grand diamètre, supérieur ou égal à 0,75, quelle que soit la façon par laquelle cette sphéricité a été obtenue.

Une particule sphérique est appelée « sphéroïdale » ou « sphéroïdisée » selon que sa sphéricité est obtenue au moment de sa prise en masse ou après cette prise en masse, par exemple par abrasion.

De préférence, l'écart relatif entre le plus grand diamètre et le plus petit diamètre de chaque particule sphérique est inférieur à 10%, de préférence inférieur à 5%. Au-delà, on considère que le défaut de sphéricité, dû à la présence d'excroissances ou de protubérances, affecte la coulabilité du mélange.

La nature des particules sphériques n'est pas limitative, pourvu que ces particules soient en des produits réfractaires, en particulier à base d'oxydes d'Al₂0₃, de ZrO₂, voire de carbure, en particulier de SiC, ou de nitrure, en particulier de Si₃N₄.

Les particules sphériques utilisées peuvent être faiblement poreuses, c'est-à-dire présenter une densité supérieure à 90% de la densité théorique, ou pleines.

Le mortier selon l'invention comporte également des « agrégats », à savoir des poudres de particules réfractaires non sphériques, ou, par exemple d'alumine, de zircone, de zircon, de carbure de silicium ou de nitrure de silicium d'un mélange de ces derniers, voire des particules réfractaires sphériques granulées.

De préférence, plus de 99%, de préférence sensiblement 100% en masse, de la matière réfractaire de base du mortier est constituée par la silice, l'alumine, la zircone, le carbure de silicium ou le nitrure de silicium.

La fabrication d'un mortier réfractaire selon l'invention se fait par mélange de l'eau, d'éventuels additifs et de différentes poudres, en fonction de l'application visée.

Ce mélange peut se faire sur site. Mais le mélange avec l'eau provoque le début du processus conduisant à la prise en masse du mortier et implique donc une utilisation rapide du mortier préparé. De préférence, les poudres et éventuellement un ou plusieurs des additifs sont donc préparés et stockés à l'état sec. Ils peuvent être mélangés, de préférence jusqu'à homogénéisation, et conditionnés, par exemple dans des sacs ou des « big bags », et livrés à l'état sec, de préférence accompagnés d'une procédure d'utilisation.

Selon l'invention, l'écart-type relatif de la distribution des tailles des particules sphériques non granulées, mesuré par le rapport entre l'écart-type et la moyenne de cette distribution, est inférieur à 100%, de préférence inférieur à 60%, de préférence encore inférieur à 10%. Autrement dit, toutes les particules sphériques de la poudre utilisée ont des diamètres proches les uns des autres. Comme on le verra plus en détail dans la suite de la description, les inventeurs ont ainsi découvert qu'il ne suffit pas d'utiliser une poudre de particules sphériques non granulées pour pouvoir se passer de la silice. Il est en outre nécessaire que les diamètres des particules sphériques ne varient pas dans de grandes proportions.

L'écart-type et la moyenne de distribution de tailles peuvent être évalués par analyse sur une population d'au moins 100 particules, de préférence 200. Les échantillons sont déposés sur un feutre autocollant, puis observés au microscope optique ou au microscope électronique à balayage selon la taille des particules. Les images acquises sont ensuite analysées à l'aide du logiciel Analysis® fourni par la Société Soft Imaging System, de manière à mesurer la taille de chaque particule de la poudre et d'en déduire la distribution.

La taille maximale des particules des poudres mélangées est de préférence de 5 mm, de préférence de 2,5 mm.

Outre l'eau, les poudres de particules réfractaires non sphériques et les particules sphériques non granulées, le mélange réfractaire selon l'invention peut également comporter un ou plusieurs additifs de mise en forme ou de frittage utilisés classiquement. Comme exemples d'additifs utilisables, on peut citer, de façon non limitative :
- des liants temporaires organiques (c'est-à-dire éliminés en tout ou en partie lors du frittage), tels que des résines, des dérivés de la cellulose ou de la lignone, comme la carboxyméthylcellulose, la dextrine, des polyvinyle alcools, etc. De préférence, la quantité du liant temporaire est comprise entre 0,1 et 6 % en poids par rapport à la masse en matières sèches du mélange.
- des agents de prise chimiques, tels que l'acide phosphorique, le monophosphate d'aluminium, etc. ;
- des agents de prise hydraulique, tels que des ciments alumineux, de type aluminate de chaux comme le ciment SECAR 71 ou le CA270.
- des défloculants ou dispersants, tels que des polyphosphates de métaux alcalins ou des dérivés méthacrylates. Tous les dispersants connus sont envisageables, ioniques purs, (par exemple HMPNa), stérique pur, par exemple de type polyméthacrylate de sodium ou combiné.
- des promoteurs de frittage tels que le bioxyde de titane (en une proportion n'excédant pas 2% environ par rapport à la masse en matières sèches du mélange) ou l'hydroxyde de magnésium ;
- des agents de mise en forme tels que les stéarates de magnésium ou de calcium ;
- des ajouts de type argileux qui vont faciliter la mise en oeuvre et aider au frittage. Ces ajouts apportent de la silice et donc, de préférence, sont limités à moins de 2% en poids. Au-delà, ils induisent une demande en eau excessive.

Les additifs peuvent être ajoutés dans le mélange de poudres si celui-ci est préparé avant humidification ou être introduits dans le mortier avec l'eau.

De préférence, le mortier comporte au moins 1% et au plus 8 % d'eau, de préférence moins de 5%, de préférence encore moins de 4%, en masse d'eau par rapport à la masse de matière sèche, en tenant compte de la présence des additifs. L'ajout d'eau est classiquement déterminé en fonction de la teneur en liant du mélange, selon la consistance ou la viscosité recherchées.

Le mélange humide, ou « mortier », peut alors être coulé, par exemple sur la paroi intérieure d'un réacteur puis, selon les conditions de service, être fritté ou céramisé *in situ* pendant la préchauffe du réacteur, de manière à réaliser un revêtement réfractaire ou pour réparer une partie endommagée d'un tel revêtement.

Le mortier selon l'invention est particulièrement bien adapté au remplissage d'interstices de moins de 25 mm, et même de moins de 10 mm par coulage simple. Il peut également servir à la fabrication de blocs frittés. A cet effet, on peut mettre en oeuvre un procédé de fabrication comportant les étapes successives suivantes :
a) coulage dans un moule d'un mortier réfractaire selon l'invention de manière à former une préforme,
b) démoulage de la préforme,
c) séchage de ladite préforme,
d) cuisson de ladite préforme, de préférence sous atmosphère oxydante, de préférence encore à une température comprise entre 1300 à 1800°C, de manière à former un bloc réfractaire fritté.

Les essais non limitatifs suivants sont donnés dans le but d'illustrer l'invention.

Les mortiers réfractaires autocoulables testés ont été fabriqués comme décrits précédemment, suivant les compositions des tableaux 1 à 3 ci-dessous.

Les poudres de particules sphériques non granulées suivantes ont été utilisées :
- Poudre de particules d'alumine sphéroïdales Admatech 0502 fournie par la Société Admatech, diamètre médian D50 =0,7µm
- Poudre de particules de zircone sphéroïdales (ZrO₂) fournie par la Société Netsch, diamètre médian D50 =1 mm
- Poudre de particules de zircon sphéroïdales (ZrSiO₄) B505NP fournie par la Société Saint-Gobain Zirpro, diamètre médian D50 =20µm

L'écart-type relatif des tailles de particules de ces poudres est inférieur à 100 %.

Les dispersants ont été ajoutés sous forme de poudres.

La coulabilité a été mesurée suivant la norme ASTM C1446-99 au moyen d'un cône tronqué creux présentant des bases de 70 et 100 mm et une hauteur de 80 mm. Le mortier testé est versé dans le cône par la petite base du cône, le cône reposant sur une table, à l'horizontal, sur sa grande base. Après une minute d'attente pour s'affranchir des phénomènes de thixotropie, le cône est soulevé de manière que le mortier s'étale sur la table naturellement, sans vibration ou autre apport d'énergie. Les diamètres du mortier étalé, dans deux directions perpendiculaires, sont mesurés 5 minutes après l'étalement. La « valeur de coulabilité » est la moyenne de ces deux valeurs, en mm. La coulabilité est d'autant plus grande que cette valeur est élevée.

Un mortier est considéré comme non coulable lorsque la valeur de coulabilité est inférieure ou égale à 100 mm. Une valeur de coulabilité comprise entre 100 et 180 correspond à une faible coulabilité. Au-delà, entre 180 et 280, la coulabilité est assez bonne mais insuffisante pour un mortier de remplissage. Au delà de 280, et en particulier au-delà de 300, la coulabilité est considérée comme satisfaisante pour un mortier de remplissage.

2 kg de mélange de poudres réfractaires ont été malaxés dans un malaxeur de type Perrier pendant 5 minutes, après ajout de l'eau. Le mortier ainsi préparé a été versé dans des moules cylindriques de 50 mm de hauteur et 50 mm de diamètre. Le démoulage a été effectué après 24 heures de séchage à l'air libre, puis 24 heures à 110°C.

La masse volumique apparente (MVA) et la porosité ouverte (PO%) ont été mesurées sur les préformes ainsi obtenues.

La porosité a été mesurée selon la norme ISO 5017. Une porosité inférieure à 20 % est considérée comme satisfaisante pour une application réfractaire.

Pour mesurer la résistance au fluage, les mortiers testés ont été versés dans des moules de dimensions 150x25x25 mm (longueur* largeur*profondeur), puis cuits à 1650°C pendant 5 heures sous air.

La composition chimique des mortiers a été classiquement calculée d'après les composants mis en oeuvre. Elle correspond à la composition, sur la base de la matière minérale, du mortier obtenu après séchage et calcination à 750°C sous air pendant environ une demi-heure, c'est-à-dire traité de manière à éliminer notamment les liants temporaires et l'eau ajoutée ou contenue dans les hydrates.

Les tableaux suivants résument les caractéristiques des échantillons testés et les résultats des essais.

**Tableau 1**

| mélanges de base des produits (formulation en % massique) | A | B | C | D |
|---|---|---|---|---|
| Grains de Corindon blanc électrofondu (6-12 mesh) Pechiney ElectroMetallurgie ) | 46 | 46 | 48,9 | 48,9 |
| Grains de Corindon blanc électrofondu (18F fourni par Treibacher ) | 26 | 26 | 27,75 | 27,77 |
| Poudre de Corindon blanc électrofondu (D50<200µm) (type WDCF de Treibacher ) | 12 | 12 | 12,7 | 12,7 |
| Fumée de Silice 983 U fournie par Elkem | 5,95 | 5,95 | 0 | 0 |
| Ciment à base d'Aluminate de CaO CA270 fourni par Alcoa | 5 | 5 | 5,3 | 5,3 |
| Poudre d'Alumine de type Bayer fournie par Almatis Diamètre médian D50 # 4,3 microns | 5 | | | |
| Poudre d'Alumine fine calcinée précédente mais sphéroidisée selon procédé défini dans brevet Asahi EP0609868 B1 | | 5 | 5,3 | 5,3 |
| Dispersant sans phosphate : type méthacrylate de sodium | | | | 0,03 |
| HMPNa dispersant poudre fourni par Rhodia | 0,05 | 0,05 | 0,05 | |
| **Somme des matières sèches** | 100 | 100 | 100 | 100 |
| Eau | +4,2 | +4,2 | +4,2 | +7 |
| Ecart-type relatif des tailles des particules sphériques ou sphéroïdisée ajoutées (en %) | NA | 230 | 230 | 230 |
| Cône selon EP0609868 B1 (mm) | 120 | 220 | NT | NT |
| Cône mm trouvé par les inventeurs (mm) | 117 | 160 | NC | NC |
| Ratio coulabilité / % eau ajoutée ** | 28 | 38 | <25 | <25 |
| Chimie calculée en % dé la composition * | | | | |
| %SiO₂ | 5,8 | 5,8 | <0,6 | <0,6 |
| %Al₂O₃ | 92 | 92 | >97,5 | >97,5 |
| %ZrO₂ | NA | NA | NA | NA |
| %SiC | NA | NA | NA | NA |

| | | | | |
|---|---|---|---|---|
| NA = non applicable ; NT= non testé ; NC=non coulable=valeur 100mm ; * comprenant la matière réfractaire de base et le ciment à base d'aluminate de chaux ; ** par rapport à la masse réfractaire de base | | | | |

**Tableau 2**

| mélanges de base des produits (formulation en % massique) | 1 Alumine Silice | 2 Alumine Alumine | 3 Alumine Alumine | 4 Alumine Zircone |
|---|---|---|---|---|
| Alumine frittée (tabulaire)T60 8-14mesh Alcoa | 30 | 30 | 23 | 24 |
| Alumine frittée (tabulaire)T60 -14mesh Alcoa | 21 | 21 | 21 | 22 |
| Alumine frittée (tabulaire)T60-325 mesh Alcoa | 25,97 | 25,97 | 25,97 | 27,97 |
| Fumée de Silice 983 U fournie par Elkem | 7 | 0 | 0 | 0 |
| Ciment à base d'Aluminate de CaO CA270 fourni par Alcoa | 4 | 4 | 4 | 4 |
| Poudre d'Alumine de type Bayer fournie par Almatis Diamètre médian D50 # 4,3 microns | 12 | 12 | 19 | 12 |
| Alumine sphéroidale Admatech 0502 par Admatech Diamètre médian D50 =0,7µm | | 7 | | |
| Alumine sphéroïdale fournie par Netsch Diamètre médian D50 =1 mm | | | 7 | |
| Particules sphéroïdales Zircone (ZrO₂) Netsch Diamètre médian D50 =1 mm | | | | 10 |
| Dispersant sans phosphate : type méthacrylate de sodium | 0,03 | 0,03 | 0,03 | 0,03 |
| **Somme des matières sèches** | 100 | 100 | 100 | 100 |
| Eau | 7,5 | 7,5 | 7,5 | 7,5 |
| Ecart-type relatif des tailles des particules sphériques ou sphéroïdisées ajoutées (en %) | NA | 52 | 6 | 7 |
| Cône de coulabilité | 355 | 370 | 340 | 340 |
| Ratio coulabilité / % eau ajoutée ** | 46 | 47 | 44 | 44 |
| MVA (masse volumique apparente) | 2,98 | 3,01 | 3,03 | |
| PO (Porosité ouverte) % | 16,3 | 18 | 19,4 | |
| Chimie calculée en % de la composition * %SiO₂ | 6,8 | <0,6 | <0,6 | <0,6 |
| %Al₂O₃ | 92,5 | 98.5 | >98 | 89 |
| %ZrO₂ | NA | NA | NA | 10 |
| %SiC | NA | NA | NA | NA |

| | | | | |
|---|---|---|---|---|
| NA = non applicable ; NT= non testé ; NC=non coulable=valeur 100mm ; * comprenant la matière réfractaire de base et le ciment à base d'aluminate de chaux ; ** par rapport à la masse réfractaire de base | | | | |

**Tableau 3**

| mélanges de base des produits (formulation en % massique) | (α) Zircone Silice | 5 Zircone Alumine | 6 Zircone Zircone | 7 Zircone Zircon | (β) SiC Silice | 8 SiC Alumine |
|---|---|---|---|---|---|---|
| Zircone dopée CaO-12/30m mesh de Unitec | 27 | 27 | 26 | 27 | | |
| Zircone dopée CaO -30/100 mesh de Unitec | 14 | 14 | 13 | 13,1 | | |
| Zircone dopée CaO -30 mesh de Unitec | 17,97 | 17,97 | 17,97 | 17,77 | | |
| Zircone dopée CaO -300 mesh de Unitec | 21 | 21 | 21 | 21,5 | | |
| Grains de SIC0, 2-2mm 14/30 de SG Materials | | | | | 26 | 26 |
| Grains de SIC0, 2-2mm36170 de SG Materials | | | | | 13 | 13 |
| Poudre de SiC0, 0,2mm80/180 de SG Materials | | | | | 17,5 | 17,5 |
| Poudre de SiC 0-0,2mm220F de SG Materials | | | | | 20,5 | 20,5 |
| Fumée de Silice 983 U fournie par Elkem | 6 | 0 | 0 | 0 | 7 | 0 |
| Ciment à base d'Aluminate de CaO CA270 fourni par Alcoa | 3 | 3 | 3 | 2,8 | 4 | 4 |
| Poudre d'Alumine de type Bayer fournie par Almatis Diamètre médian D50 # 4,3 microns | 11 | 11 | 10 | 10,3 | 12 | 12 |
| Alumine sphéroïdale Admatech 0502 par Admatech Diamètre médian D50 =0,7µm | 0 | 6 | | | 0 | 7 |
| Particules sphéroïdales Zircone (ZrO2) Netsch Diamètre médian D50 =1 mm | | | 9 | | | |
| Particules sphéroïdales de Zircon (ZrSiO4) B505NP fournies par Saint-Gobain Zirpro; Diamètre médian D50 =20µm | | | | 7,5 | | |
| Dispersant sans phosphate : type méthacrylate de sodium | 0,03 | 0,03 | 0,03 | 0,03 | 0,03 | 0,03 |
| **Somme des matières sèches** | 100 | 100 | 100 | 100 | 100 | 100 |
| Eau | 6 | 6 | 6 | 6 | 9 | 8 |
| Ecart-type relatif des tailles des particules sphériques ou sphéroïdisées ajoutées (en %) | NA | 52 | 7 | 42 | NA | 52 |
| Cône de coulabilité (mm) | 360 | 370 | 310 | 370 | 340 | 325 |
| Ratio coulabilité / % eau ajoutée ** | 58 | 60 | 50 | 60 | 36 | 39 |
| MVA (masse volumique apparente) | 3,71 | | 4,2 | 4,12 | 2,62 | 2,62 |
| PO (Porosité ouverte) % | 17,8 | | 19,5 | 18,4 | 12,2 | 15,9 |
| Chimie calculée en % de la composition * %SiO₂ | 6 | <0,6 | <0,6 | 3 | 8,5 | <2 |
| %Al₂O₃ | 13 | 19 | 12 | 13 | 14,5 | 21 |
| %ZrO₂ | 76 | 76 | 83 | 81 | NA | NA |
| %SiC | NA | NA | NA | NA | 75 | 75 |

| | | | | | | |
|---|---|---|---|---|---|---|
| NA = non applicable ; NT= non testé ; NC=non coulable=valeur 100mm; * comprenant la matière réfractaire de base et le ciment à base d'aluminate de chaux ; ** par rapport à la masse réfractaire de base | | | | | | |

Les exemples A et B concernent des compositions décrites dans EP 0 609 868. Leur comparaison permet de démontrer l'effet positif sur la coulabilité, connu, d'une poudre d'alumine sphéroïdisée par rapport à celui d'une poudre d'alumine non sphéroïdisée. La coulabilité des exemples A et B reste inférieure à la valeur nécessaire pour un mortier de remplissage.

La composition C diffère de la composition A en ce que la silice a été remplacée par de la poudre d'alumine sphéroïdisée. On constate que cette substitution a conduit à une dégradation de la coulabilité. L'utilisation d'une poudre d'alumine sphéroïdisée quelconque ne suffit donc pas pour compenser la perte de coulabilité résultant de l'absence de fumée de silice.

La composition C diffère de la composition B en ce qu'elle ne comporte pas de silice. On constate que cette substitution a également conduit à une dégradation de la coulabilité. La comparaison des exemples A, B et C confirment donc le préjugé technique selon lequel une absence de silice conduit à une dégradation de la coulabilité. Les compositions décrites dans EP0609868 ne permettent donc pas de fabriquer un mortier de remplissage autocoulable.

L'exemple D montre aussi qu'un changement de dispersant ne conduit pas à une amélioration de la coulabilité de la composition C.

Une comparaison des exemples 1 et 2 montre que la substitution de la silice par de la poudre d'alumine fine sphérique présentant un diamètre médian D50 de 0,7 µm et un écart-type relatif de 52 améliore la coulabilité. En comparant l'exemple 2 et l'exemple A, on constate l'importance de l'aspect sphérique de la poudre d'alumine : L'utilisation d'une poudre d'alumine non sphérique d'un diamètre médian de 4,3 µm ne permet pas en effet d'atteindre un résultat satisfaisant, malgré la présence de silice.

Une comparaison des exemples 2 à 4 montre que l'utilisation de poudre d'alumine fine sphérique présentant un diamètre médian de 0,7 µm ou 1 mm ou d'une poudre de zircone fine sphérique présentant un diamètre médian de 1 mm permet également d'obtenir des résultats proches de ceux obtenus avec un ajout de silice, pourvu que l'écart-type relatif soit inférieur à 100%. Un diamètre médian inférieur à 1 µm fournit les meilleurs résultats.

Une comparaison des exemples 3 et 4 montre que l'utilisation de poudre d'alumine fine sphérique ou d'une poudre de zircone fine sphérique présentant un diamètre médian de 1 mm permet d'obtenir des résultats similaires.

Les exemples (α) et 5 à 7 montrent qu'une bonne coulabilité d'un mortier réfractaire à base de zircone ne contenant pas ou peu de silice peut également être obtenue par la présence d'une poudre de particules sphériques de taille médiane de 0,7 µm, 20 µm ou 1 mm, que cette poudre soit une poudre d'alumine, de zircone ou de zircon.

Un diamètre médian inférieur à 1 µm, en l'occurrence de 0,7 µm, fournit les meilleurs résultats (cône de 370 mm).

Les meilleurs résultats (cône de 370 mm) sont également obtenus avec un diamètre médian de 20 µm et une poudre de particules sphériques de zircon. Le zircon permet ainsi d'utiliser des poudres moins fines, et donc moins coûteuses. Mais le zircon introduit cependant un peu de silice qui, comme expliqué en introduction, dégrade certaines propriétés du produit fritté obtenu.

De même, les exemples (β) et 8 montrent qu'une bonne coulabilité d'un mortier réfractaire à base de carbure de silicium ne contenant pas ou peu de silice peut également être obtenue par la présence d'une poudre de particules d'alumine sphériques de taille médiane de 0,7 µm.

Par ailleurs, les mesures de la porosité et de la masse volumique apparente montrent que tous les produits fabriqués à partir de mortiers réfractaires autocoulables selon l'invention présentent une porosité inférieure à 20 %, c'est-à-dire satisfaisante pour une application réfractaire.

Le tableau 4 suivant montre que les produits fabriqués à partir des mortiers réfractaires selon l'invention (par cuisson et céramisation) présentent, comme cela est connu, une résistance au fluage supérieure à celle des mortiers contenant de la silice.

**Tableau 4**

| Résistance au fluage | 1 (Alumine Silice) | 2 (Alumine Alumine) | 3 (Alumine Alumine) |
|---|---|---|---|
| MVA (masse volumique apparente) | 2,98 | 3,01 | 3,05 |
| PO (Porosité ouverte) % | 16,3 | 18 | 17,9 |
| Fluage 1500°C/0,2MPa/air selon norme ISO 3187 | | | |
| Entre 5 et 25 h variation dimensionnelle en % | -3,5 | -0,2 | -0,6 |
| Entre 5 et 100h variation dimensionnelle en % | -7,9 | -0,6 | -1,2 |

Il va de soi que les modes de réalisation décrits ne sont que des exemples et qu'on pourrait les modifier, notamment par substitution d'équivalents techniques, sans sortir pour cela du cadre de l'invention.

## Revendications

1. Mortier réfractaire de remplissage autocoulable comportant, en pourcentages en masse sur la base de la matière réfractaire de base, au moins 1 % et au plus 10 % de particules sphériques non granulées de taille médiane supérieure ou égare à 0,1 µm et inférieure ou égale à 2 mm, et comportant, en pourcentage en masse par rapport à la masse totale de matière sèche du mortier, moins de 4,5% de silice (SiO₂) et entre 1 % et 8 % d'eau, l'écart-type relatif des tailles des particules sphériques non granulées étant inférieur à 100%.

2. Mortier réfractaire de remplissage autocoulable selon la revendication 1 dans lequel l'écart-type relatif des tailles des particules sphériques non granulées est inférieur à 60%.

3. Mortier réfractaire de remplissage autocoulable selon l'une quelconque des revendications 1 et 2 comportant au moins 5 % de particules sphériques non granulées en pourcentage en masse sur la base de la matière réfractaire de base.

4. Mortier réfractaire de remplissage autocoulable selon l'une quelconque des revendications précédentes dans lequel les particules sphériques non granulées ont une taille médiane inférieure ou égale à 100 µm.

5. Mortier réfractaire de remplissage autocoulable selon la revendication 4 dans lequel les particules sphériques non granulées ont une taille médiane inférieure ou égale à 1 µm.

6. Mortier réfractaire de remplissage autocoulable selon l'une quelconque des revendications précédentes comportant moins de 2% de silice, en pourcentage en masse sur la base de la matière sèche.

7. Mortier réfractaire de remplissage autocoulable selon l'une quelconque des revendications précédentes, dans lequel les particules sphériques présentent une sphéricité supérieure ou égale à 0,8.

8. Mortier réfractaire de remplissage autocoulable selon la revendication 7, dans lequel les particules sphériques présentent une sphéricité supérieure ou égale à 0,9.

9. Mortier réfractaire de remplissage autocoulable selon l'une quelconque des revendications précédentes, dans lequel la teneur en alumine est supérieure à 95 % en pourcentage en masse sur la base de la matière sèche.

10. Mortier réfractaire de remplissage autocoulable selon l'une quelconque des revendications précédentes comportant moins de 5% d'eau, en pourcentage en masse par rapport à la masse de matière sèche.

11. Utilisation d'un mortier selon l'une quelconque des revendications précédentes pour remplir par autocoulage un orifice de moins de 25 mm de large.

## Claims

1. Self-flow filling refractory mortar comprising, in mass percentage based on the base refractory matter, at least 1% and at most 10% of non-granulated spherical particles of median size greater than or equal to 0.1 µm and less than or equal to 2 mm, and comprising, in mass percentage based on the total dry, matter of the mortar, less than 4.5% silica (SiO₂) and between 1% and 8% water, the relative standard deviation of the sizes of the non-granulated spherical particles being less than 100%.

2. Self-flow filling refractory mortar according to claim 1 in which the relative standard deviation of the sizes of the non-granulated spherical particles is less than 60%.

3. Self-flow filling refractory mortar according to any of claims 1 and 2, comprising at least 5% non-granulated spherical particles as a mass percentage based on the base refractory matter.

4. Self-flow filling refractory mortar according to any of the preceding claims in which the non-granulated spherical particles have a median size less than or equal to 100 µm.

5. Self-flow filling refractory mortar according to claim 4, in which the non-granulated spherical particles have a median size less than or equal to 1 µm.

6. Self-flow filling refractory mortar according to any of the preceding claims, comprising less than 2% silica in mass percentage based on the dry matter.

7. Self-flow filling refractory mortar according to any of the preceding claims in which the spherical particles have a sphericity greater than or equal to 0.8.

8. Self-flow filling refractory mortar according to claim 7 in which the spherical particles have a sphericity greater than or equal to 0.9.

9. Self-flow filling refractory mortar according to any of the preceding claims in which the alumina content is greater than 95% in mass percentage based on the dry matter.

10. Self-flow filling refractory mortar according to any of the preceding claims, comprising less than 5% water in mass percentage in relation to the mass of dry matter.

11. Use of a mortar according to any of the preceding claims to fill by self-flow an opening less than 25 mm wide.

## Patentansprüche

1. Selbstfließende feuerfeste Füllmasse aufweisend, in Masseprozenten auf der Basis des konstituierenden feuerfesten Materials, mindestens 1% und höchstens 10% an nicht granulierten sphärischen Partikeln mit einer Abmessung größer oder gleich 0,1 µm und kleiner oder gleich 2 mm, und aufweisend in Masseprozenten bezogen auf die Gesamtmasse der Trockenbestandteile der Mischung weniger als 4,5% Siliziumoxid (SiO₂) und zwischen 1% und 8% Wasser, die relative Standardabweichung der Größen der nicht granulierten sphärischen Partikel ist unter 100%.

2. Selbstfließende feuerfeste Füllmasse nach Anspruch 1, bei der die relative Standardabweichung der Größen der nicht granulierten sphärischen Partikel unter 60% ist.

3. Selbstfließende feuerfeste Füllmasse nach einem beliebigen der Ansprüche 1 oder 2, die, in Masseprozenten auf der Basis der konstituierenden feuerfesten Materials, mindestens 5% nicht granulierte sphärische Partikel aufweist.

4. Selbstfließende feuerfeste Füllmasse nach einem beliebigen der vorangegangenen Ansprüche, bei der die nicht granulierten sphärischen Partikel eine mittlere Abmessung kleiner oder gleich 100 µm haben.

5. Selbstfließende feuerfeste Füllmasse nach Anspruch 4, bei der die nicht granulierten sphärischen Partikel eine mittlere Abmessung kleiner oder gleich 1 µm haben.

6. Selbstfließende feuerfeste Füllmasse nach einem beliebigen der vorangegangenen Ansprüche, die, in Masseprozenten auf der Basis des Trockenmaterials, mindestens 2% Siliziumoxid aufweist.

7. Selbstfließende feuerfeste Füllmasse nach einem beliebigen der vorangegangenen Ansprüche, bei der die sphärischen Partikel eine Sphärizität über oder gleich 0,8 aufweisen.

8. Selbstfließende feuerfeste Füllmasse nach Anspruch 7, bei der die sphärischen Partikel eine Sphärizität über oder gleich 0,9 aufweisen.

9. Selbstfließende feuerfeste Füllmasse nach einem beliebigen der vorangegangenen Ansprüche, bei der der Gehalt an Aluminiumoxid oberhalb von 95% in Masseprozenten auf der Basis des Trockenmaterials liegt.

10. Selbstfließende feuerfeste Füllmasse nach einem beliebigen der vorangegangenen Ansprüche, die mindestens 5% Wasser, in Masseprozenten auf der Basis des Trockenmaterials, aufweist.

11. Verwendung einer Füllmasse nach einem beliebigen der vorangegangenen Ansprüche, um eine Öffnung von weniger als 25 mm Abmessung durch Selbstfließen zu füllen.
